Europäisches Patentamt

European Patent Office

Office européen des brevets

(19)

(11) Veröffentlichungsnummer: **0 314 921**

**A2**

(12) # EUROPÄISCHE PATENTANMELDUNG

(21) Anmeldenummer: 88116165.7

(51) Int. Cl.⁴: **G06M 7/00**

(22) Anmeldetag: 30.09.88

(30) Priorität: 07.10.87 DE 3733878

(43) Veröffentlichungstag der Anmeldung:
10.05.89 Patentblatt 89/19

(84) Benannte Vertragsstaaten:
**AT BE CH DE FR GB IT LI NL**

(71) Anmelder: **DI-SORIC INDUSTRIE-ELECTRONIC GMBH & CO**
**Steinbeisstrasse 6**
**D-7068 Urbach(DE)**

(72) Erfinder: **Höllmann, Detlef**
**Luisental 3**
**D-5880 Lüdenscheid(DE)**

(54) **Gerät zur Materialflusserfassung.**

(57) Bei einem Gerät zur Erfassung des Materialflusses sind am Umfang eines ringförmigen Durchgangs (2) in einem Tastkopf (1) lichtemittierende Elemente (S) und gegenüberliegende lichtempfangende Elemente (E) kreisförmig angeordnet.

Fig. 1

EP 0 314 921 A2

## Gerät zur Materialflusserfassung

Die Erfindung betrifft ein Gerät zur Erfassung des Materialflusses.

Bisher bekannte Geräte, beispielsweise zur Überwachung des Materialflusses von Schrauben oder anderen Kleinteilen in einem Zuführschlauch an einer Montagemaschine, arbeiten auf induktiver Basis. Der Nachteil von solchen sogenannten induktiven Ringsonden ist, daß sie nur metallische Teile erfassen können.

Aufgabe der Erfindung ist es deshalb, ein Gerät zu konzipieren, das zuverlässig nicht nur metallische Teile sondern auch Teile aus Nichtmetall, beispielsweise Kunststoff, erfassen kann.

Diese Aufgabe wird bei einem Gerät zur Erfassung des Materialflusses dadurch gelöst, daß am Umfang eines ringförmigen Durchgangs eines Tastkopfes des Geräts mindestens zwei lichtemittierende Elemente und zwei gegenüberliegende lichtempfangende Elemente kreisförmig angeordnet sind und daß die lichtempfangenden Elemente eine aus einem Verstärker, einer Auswerteschaltung und einer Endstufe bestehende Auswerte-Elektronik ansteuern.

Auf diese Weise lassen sich nicht nur feste Teile aus beliebigem Material in einem Zuführschlauch, sondern beispielsweise auch der Strom von Flüssigkeiten überwachen. Natürlich können auch alle Materialien ohne Zuführschlauch detektiert werden.

In einer ersten Ausführungsform sind die lichtemittierenden Elemente und die lichtempfangenden Elemente diametral so angeordnet, daß sich die Lichtstrahlen der lichtemittierenden Elemente im Mittelpunkt des ringförmigen Durchgangs kreuzen. Diese Ausführungsform eignet sich beispielsweise für Zuführschläuche mit verhältnismäßig kleinem Durchmesser oder für Flüssigkeiten. Hierbei ist es vorteilhaft, wenn der Abstand der auf dem Umfang des ringförmigen Durchgangs angeordneten Elemente gleich groß ist, da hierdurch der Raum in dem Zuführschlauch besonders gut abgedeckt wird.

In einer zweiten Ausführungsform, die sich insbesondere für Geräte mit verhältnismäßig großem Durchmesser des ringförmigen Durchgangs bzw. für größere Zuführschläuche eignet, sind die lichtemittierenden Elemente am Umfang des Durchgangs so ausgerichtet, daß die Lichtstrahlen einer ersten Anzahl dieser lichtemittierenden Elemente parallel und die Lichtstrahlen einer zweiten Anzahl der lichtemittierenden Elemente untereinander ebenfalls parallel, aber senkrecht zu der ersten Anzahl der lichtemittierenden Elemente verlaufen.

Besonders vorteilhaft eignen sich als lichtemittierende Elemente Galliumarsendid-Lumineszenzdioden, die unmoduliertes Infrarotlicht aussenden, da bei Licht mit verhältnismäßig langer Wellenlänge der Brechungsindex vernachlässigbarer ist als bei Licht mit kürzerer Wellenlänge. Die lichtempfangenden Elemente können beispielsweise Silizium-Fototransistoren sein.

Weitere vorteilhafte Ausgestaltungen sind den übrigen Unteransprüchen entnehmbar.

Anhand von den in den Figuren dargestellten Ausführungsbeispielen wird im folgenden die Erfindung näher erläutert.

In der Zeichnung zeigt die

Fig. 1: Eine Ausführungsform dieses Gerätes

Fig. 2: Anordnungen der lichtemittierenden und lichtempfangenden Elemente auf dem Umfang des Durchgangs sowie den dazugehörigen Strahlenverlauf

Fig. 3: Das Prinzipschaltbild einer Auswerteelektronik.

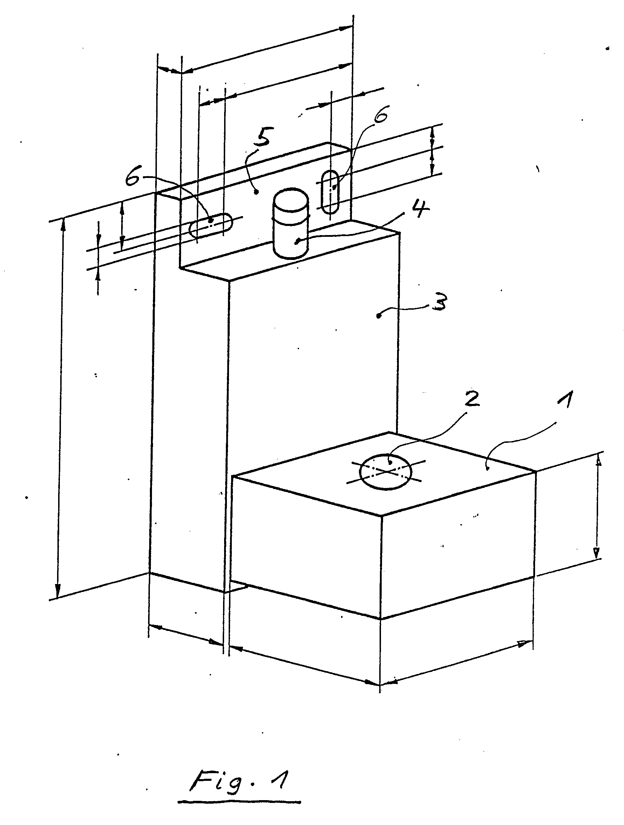

In Figur 1 ist eine perspektivische Darstellung eines Gerätes gezeigt, das aus einem Tastkopf 1 und einem Gehäuse 3 zur Aufnahme der Auswerte-Elektronik besteht. In dem hier gezeigten Beispiel ist der Tastkopf 1 und das Gehäuse 3 für die Auswerte-Elektronik baulich miteinander vereinigt. Die Auswerte-Elektronik kann aber auch von dem Tastkopf 1 räumlich getrennt angeordnet werden, wobei dann die Ausgangssignale des Tastkopfes 1 der Auswerte-Elektronik über Kabel zugeführt werden.

Der Tastkopf 1 enthält in der Mitte einen zylinderförmigen Durchgang 2, durch den, sofern erforderlich, ein Zuführschlauch verläuft, in welchem der zu überwachende Materialfluß stattfindet. Der Durchmesser des Durchganges 2 ist vom Außendurchmesser des Zuführschlauches abhängig. Das Gehäuse 3 zur Aufnahme der Auswerte-Elektronik weist hier einen plattenförmigen Fortsatz 5 mit zwei Befestigungslöchern 6 auf. Das Ausgangssignal der Auswerte-Elektronik kann an einer Anschlußbuchse 4 abgenommen werden.

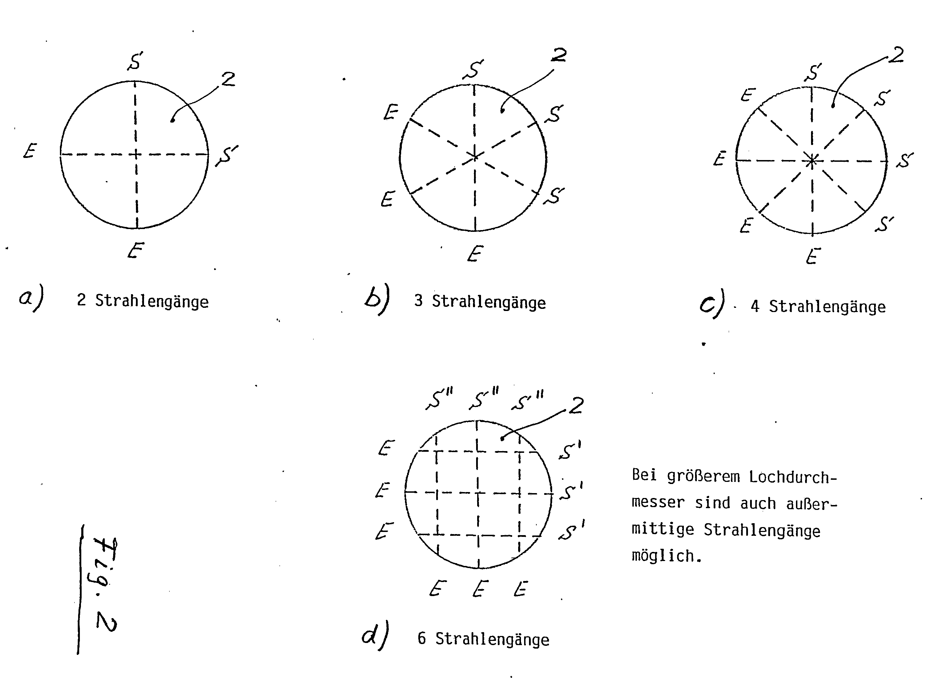

Verschiedene Anordnungen von lichtemittierenden Elementen (Sender S) und lichtempfangenden Elementen (Empfänger E) auf dem Umfang des Durchganges 2 im Tastkopf 1 sind in Fig. 2 dargestellt.

Fig. 2a zeigt eine Anordnung mit zwei Sendern S und zwei gegenüberliegenden Empfängern E, Fig. 2b mit drei Sendern S und drei Empfängern E und Fig. 2c mit vier Sendern S und vier Empfängern E, wobei in allen drei Fällen die Sender und Empfänger gleichen Abstand auf dem Umfang des Durchganges 2 haben und sich die von den Sendern S ausgesandten Lichtstrahlen, die durch gestrichelte Linien dargestellt sind, im Mittelpunkt des Zuführschlauches kreuzen. Je größer der lichte Durchmesser des Zuführschlauches ist im Vergleich zur Größe der durch ihn hindurchströmenden Teile, um so mehr Sender S und Empfänger E werden in vorteilhafter Weise angebracht. In Fig. 2d ist eine Anordnung gegezeigt, in der sich zweimal drei Sender S und Empfänger E gegenüberstehen. Die Sender S sind hier so angeordnet, daß sich die von ihnen ausgesandten Lichtstrahlen nicht wie bei den Beispielen in Fig. 2a - c im Mittelpunkt kreuzen, sondern die von den drei Sendern $S^{'}$ ausgesandten Lichtstrahlen parallel und die von der zweiten Gruppe von Sendern $S^{''}$ ausgesandten Lichtstrahlen unter sich ebenfalls parallel verlaufen, aber rechtwinklig zu den von der ersten Gruppe von Sendern $S^{'}$ ausgesandten Lichtstrahlen. Eine solche Anordnung wird beispielsweise in vorteilhafter Weise angewandt, wenn der Innendurchmesser des Zuführschlauches im Vergleich zur Größe der in ihm strömenden Teile verhältnismäßig groß ist.

Die in Fig. 2a gezeigte Anwendungsform mit zwei Sendern und zwei Empfängern kann beispielsweise bei einem Zuführschlauch mit 10 mm Außendurchmesser und 8 mm Innendurchmesser Gegenstände, beispielsweise Kugeln, bis herunter zu 1 mm Durchmesser noch sicher erfassen. Auch läßt sich mit dieser Anordnung auf einfache und kostengünstige Weise der Durchfluß von Flüssigkeiten überwachen.

Das Leistungsspektrum zwischen Sendern und Empfängern verläuft aufgrund von Reflexionen des ausgesandten Lichtstrahls an der Innenwand des Zuführschlauches ellipsenförmig, so daß auch Teile erkannt werden, die sich nicht auf einer direkten Linie zwischen Sendern und Empfängern vorbei bewegen.

Besonders vorteilhaft sind als Sender Galliumarsenid-Lumineszenzdioden einsetzbar, die unmoduliertes Infrarotlicht mit einer Wellenlänge von 930 nm aussenden, da sich bei Licht mit verhältnismäßig langer Wellenlänge der Brechungsindex nicht mehr so stark bemerkbar macht. Natürlich muß der Zuführschlauch für die entsprechende Wellenlänge durchlässig sein.

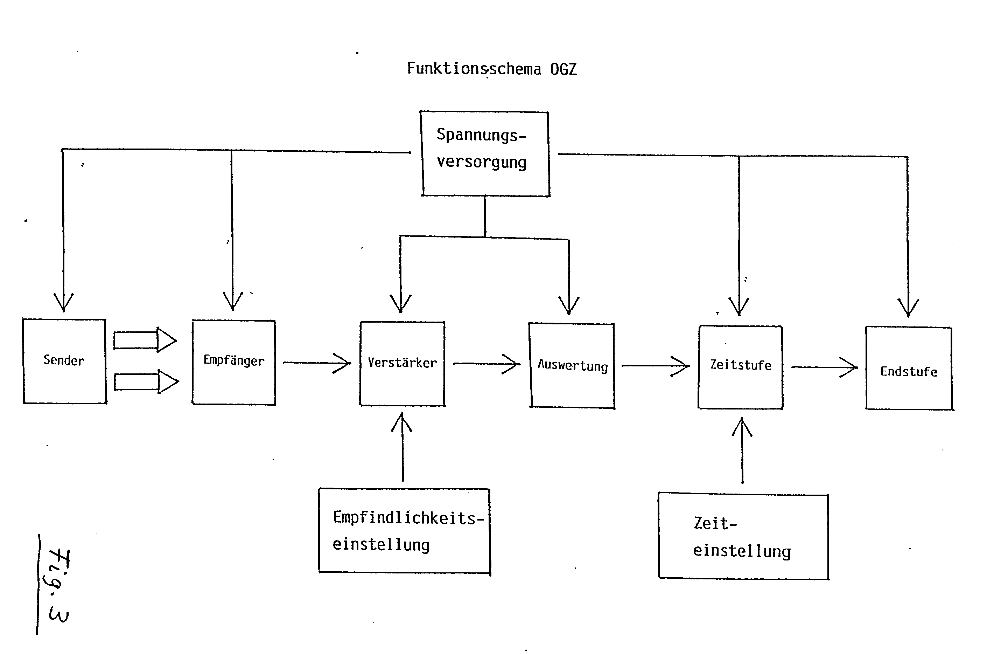

Passieren nun die im Zuführschlauch transportierten Teile den Tastkopf des Geräts, wird mindestens ein Strahlengang unterbrochen, was von der den Empfängern nachgeschalteten und im Prinzip in Fig. 3 dargestellten Auswerte-Elektronik erkannt wird. Die verschiedenen Empfänger E sind in Reihe geschaltet. Durch entsprechende Schwellwerteinstellung wird die Unterbrechung eines Strahlenganges detektiert.

Die in Fig. 3 gezeigte Auswerte-Elektronik besteht im wesentlichen aus einem Verstärker, der das vom Empfänger abgegebene Signal verstärkt, · einer Auswertungsstufe, die feststellt, ob ein Lichtstrahl unterbrochen wurde oder nicht (beispielsweise durch Abgabe eines binären "0" oder "1" Signals), einer Zeitstufe, mit der das abgegebene Signal verlängert werden kann, und einer Endstufe. Der Verstärker ist in seiner Empfindlichkeit einstellbar, wodurch sich beispielsweise Verschmutzungen des Zuführschlauches, wie schlechtere Lichtdurchlässigkeit durch Alterung, weitestgehend kompensieren lassen. Die Endstufe schaltet das Ausgangssignal durch. Werden alle Lichtstrahlen wieder freigegeben, so bleibt das Ausgangssignal für die Dauer der eingestellten Verzögerungszeit erhalten.

Das erfindungsgemäße Gerät kann nicht nur dazu benutzt werden, um festzustellen, ob sich Gegenstände in dem Zuführschlauch befinden oder nicht, sondern auch zum Zählen von Teilen, wenn die Teile vorher separiert wurden. Es ist eine Zählfrequenz von 10 kHz möglich.

## Ansprüche

1. Gerät zur Erfassung des Materialflusses dadurch gekennzeichnet, daß am Umfang eines ringförmigen Durchgangs (2) eines Tastkopfes (1) des Geräts mindestens zwei lichtemittierende Elemente (S) und zwei gegenüberliegende lichtempfangende Elemente (E) kreisförmig angeordnet sind und daß die lichtempfangenden Elemente (E) eine aus einem Verstärker, einer Auswerteschaltung und einer Endstufe bestehenden Auswerte-Elektronik ansteuern.

2. Gerät nach Anspruch 1, dadurch gekennzeichnet, daß die lichtemittierenden Elemente (S) diametral zu den lichtempfangenden Elementen (E) angeordnet sind und daß sich die Lichtstrahlen der lichtemittierenden Elemente (S) im Mittelpunkt des ringförmigen Durchgangs (2) kreuzen.

3. Gerät nach Anspruch 2, dadurch gekennzeichnet, daß die Abstände auf dem Umfang des Durchgangs (2) der lichtemittierenden Elemente (S) einerseits und der lichtempfangenden Elemente (E) andererseits jeweils gleich groß sind.

4. Gerät nach Anspruch 1, dadurch gekennzeichnet, daß die lichtemittierenden Elemente (S) auf dem Umfang des Durchgangs (2) so ausgerichtet sind, daß die Lichtstrahlen einer ersten Anzahl dieser lichtemittierenden Elemente ($S^{'}$) parallel und die Lichtstrahlen einer zweiten Anzahl der lichtemittierenden Elemente ($S^{''}$) untereinander ebenfalls parallel, aber senkrecht zu der ersten Anzahl der lichtemittierenden Elemente ($S^{'}$) verlaufen.

5. Gerät nach Anspruch 1, dadurch gekennzeichnet, daß die lichtemittierenden Elemente (S) unmoduliertes Infrarotlicht aussenden.

6. Gerät nach Anspruch 5, dadurch gekennzeichnet, daß die lichtemittierenden Elemente (S) Galliumaluminiumarsenid-Lumineszenzdioden sind.

7. Gerät nach Anspruch 1, dadurch gekennzeichnet, daß die lichtempfangenden Elemente (E) Silizium-Fototransistoren oder Silizium-Fotodioden sind.

8. Gerät nach Anspruch 1, dadurch gekennzeichnet, daß der Verstärker in seiner Empfindlichkeit einstellbar ist.

9. Gerät nach Anspruch 1, dadurch gekennzeichnet, daß zwischen die Auswerteschaltung und die Endstufe eine Zeitstufe geschaltet ist, die das Ausgangssignal der Auswerteschaltung einstellbar verlängert.

10. Gerät nach einem der vorhergehenden Ansprüche, dadurch gekennzeichnet, daß die lichtempfangenden Elemente (E) in Reihe geschaltet sind.

Fig. 1

a) 2 Strahlengänge

b) 3 Strahlengänge

c) 4 Strahlengänge

d) 6 Strahlengänge

Bei größerem Lochdurchmesser sind auch außermittige Strahlengänge
möglich.

Fig. 2

Funktionsschema OGZ

```
                              ┌──────────────┐
                              │  Spannungs-  │
          ┌───────────────────│  versorgung  │──────────────────┐
          │          ┌────────│              │───────┐          │
          │          │        └──────┬───────┘       │          │
          │          │          ┌────┴────┐          │          │
          ▼          ▼          ▼         ▼          ▼          ▼
    ┌────────┐   ┌─────────┐ ┌──────────┐ ┌──────────┐ ┌─────────┐ ┌─────────┐
    │        │⇒  │         │ │          │ │          │ │         │ │         │
    │ Sender │⇒  │Empfänger│→│Verstärker│→│Auswertung│→│Zeitstufe│→│Endstufe │
    │        │   │         │ │          │ │          │ │         │ │         │
    └────────┘   └─────────┘ └────┬─────┘ └──────────┘ └────┬────┘ └─────────┘
                                  ▲                         ▲
                                  │                         │
                          ┌───────────────┐         ┌──────────────┐
                          │Empfindlichkeits-│        │    Zeit-     │
                          │ einstellung    │         │ einstellung  │
                          └───────────────┘         └──────────────┘
```

Fig. 3

EP 0 314 921 A2